(19) Europäisches Patentamt / European Patent Office / Office européen des brevets

(11) **EP 4 675 391 A1**

(12) **EUROPEAN PATENT APPLICATION**
published in accordance with Art. 153(4) EPC

(43) Date of publication:
07.01.2026 Bulletin 2026/02

(21) Application number: 24763673.1

(22) Date of filing: 19.02.2024

(51) International Patent Classification (IPC):
**G05G 5/03** (2008.04)     **B60K 26/02** (2006.01)
**G05G 1/30** (2008.04)

(52) Cooperative Patent Classification (CPC):
**B60K 26/02; G05G 1/30; G05G 5/03**

(86) International application number:
**PCT/JP2024/005666**

(87) International publication number:
**WO 2024/181191 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.02.2023 JP 2023029587

(71) Applicant: **DENSO CORPORATION**
**Kariya-city, Aichi 448-8661 (JP)**

(72) Inventor: **KITA, Takuto**
**Kariya-city, Aichi 448-8661 (JP)**

(74) Representative: **Kuhnen & Wacker
Patent- und Rechtsanwaltsbüro PartG mbB
Prinz-Ludwig-Straße 40A
85354 Freising (DE)**

(54) **ACCELERATOR DEVICE**

(57)     An accelerator device (1) includes a pedal lever (20) that operates in response to depression of a pedal, a drive source (31) that generates a drive force when energized, and a power transmission mechanism (40). The power transmission mechanism (40) has an actuator lever (45), and applies a reaction force, which is a force in a direction opposite to a depression direction, to the pedal lever (20) via the actuator lever (45) when electricity is applied to the drive source (31). The actuator lever (45) is rotatable by the driving force of the drive source (31) and abuts against the pedal lever (20) at a lever contact point. A rotation axis (451) of the actuator lever (45) is located between a first straight line which is a line connecting the lever contact point and the pedal rotation fulcrum (22) when the depression angle is a first depression angle, and a second straight line which is a line connecting the lever contact point and the pedal rotation fulcrum (22) when the depression angle is a second depression angle.

FIG. 2

**Description**

CROSS REFERENCE TO RELATED APPLICATIONS

This application is based on Patent Application No. 2023-029587 filed on February 28, 2023, the description of which is incorporated herein by reference.

TECHNICAL FIELD

The present disclosure relates to an accelerator device.

BACKGROUND

A vehicle accelerator pedal device equipped with a reaction force application mechanism is known. For example, in Patent Document 1, the reaction force application mechanism includes a drive source that generates a reaction force, a transmission member that transmits the reaction force generated by the drive source to a pedal side arm, and a bracket that supports the drive source, and adds the reaction force against a depressing force applied to the pad to the pedal side arm in accordance with a control signal from a control unit.

PRIOR ART DOCUMENT

PATENT DOCUMENT

Patent Document 1: Japanese Patent No. 5636522

SUMMARY OF INVENTION

Incidentally, when the state of contact with the power transmission member changes depending on a pedal depression angle, a magnitude of the reaction force transmitted to a driver changes even if the same torque is applied by the actuator. An object of the present disclosure is to provide an accelerator device that appropriately applies a reaction force to a pedal lever.
An accelerator device according to a first aspect of the present disclosure includes a pedal lever, a drive source, and a power transmission mechanism. The pedal lever operates in response to a depression operation. The drive source generates a driving force by being energized. The power transmission mechanism has an actuator lever that is rotatable by a driving force of the drive source and abuts against the pedal lever at a lever contact point. When electricity is applied to the drive source, a reaction force in a direction opposite to a pedal lever depression direction is applied to the pedal lever via an actuator lever.
Within a range from a fully closed position to a fully open position of the pedal lever, a reaction force application region is defined as a region between a first depression angle and a second depression angle of the pedal lever. In addition, a center of rotation of the member that abuts against the actuator lever serves as the pedal rotation fulcrum. The center of rotation of the actuator lever is located between a first straight line which is a line connecting the lever contact point and the pedal rotation fulcrum when the depression angle is a first depression angle, and a second straight line which is a line connecting the lever contact point and the pedal rotation fulcrum when the depression angle is a second depression angle. This makes it possible to reduce a variation in the reaction force applied to the pedal lever.
An accelerator device according to a second aspect of the present disclosure includes a pedal lever, a drive source, and a power transmission mechanism. The pedal lever operates in response to a depression operation. The drive source generates a driving force by being energized. The power transmission mechanism has an actuator lever that is movable linearly by a driving force of the drive source and abuts against the pedal lever at a lever contact point. When electricity is applied to the drive source, a reaction force in a direction opposite to a pedal lever depression direction is applied to the pedal lever via an actuator lever.
Within a range from a fully closed position to a fully open position of the pedal lever, a reaction force application region is defined as a region between a first depression angle and a second depression angle of the pedal lever. The center of rotation of the member that abuts against the actuator lever serves as the pedal rotation fulcrum. A linear axis of the actuator lever is located between a first straight line which is a line passing through the lever contact point and perpendicular to a line connecting the lever contact point and the pedal rotation fulcrum when the depression angle is a first depression angle, and a second straight line which is a line passing through the lever contact point and perpendicular to a line connecting the lever contact point and the pedal rotation fulcrum when the depression angle is a second depression angle. This makes it possible to reduce a variation in the reaction force applied to the pedal lever.

BRIEF DESCRIPTION OF DRAWINGS

The above and other objects, features and advantages of the present disclosure will become more apparent from the following detailed description taken in conjunction with the accompanying drawings. In the drawings:

FIG. 1 is a schematic diagram showing an accelerator device according to a first embodiment;
FIG. 2 is a schematic diagram illustrating a reaction force application region in the accelerator device according to the first embodiment;
FIG. 3 is a diagram illustrating a relationship between a pedal opening degree and a cos value according to the first embodiment;
FIG. 4 is a schematic diagram showing a case where a rotation axis of an actuator lever according to the first embodiment is on a bisector of a reaction force application region;
FIG. 5 is a schematic diagram showing an accelerator device according to a second embodiment; and
FIG. 6 is a schematic diagram showing an actuator according to the second embodiment.

DETAILED DESCRIPTION

Hereinafter, an accelerator device according to the present disclosure will be described with reference to the drawings. In a plurality of embodiments, the same reference marks are used for substantially the same elements, and description thereof will be omitted.

First Embodiment:

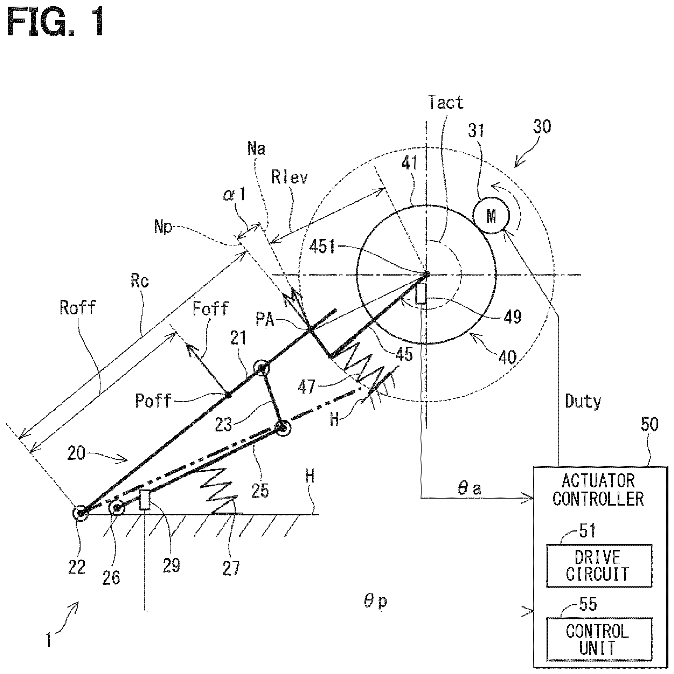

A first embodiment is shown in FIGS. 1 to 3. As shown in FIG. 1, the accelerator device 1 includes a pedal lever 20 and an actuator 30. The pedal lever 20 has a pad 21, an arm 23, a pedal 25, etc., and is driven as a whole by the driver's depression operation, etc.

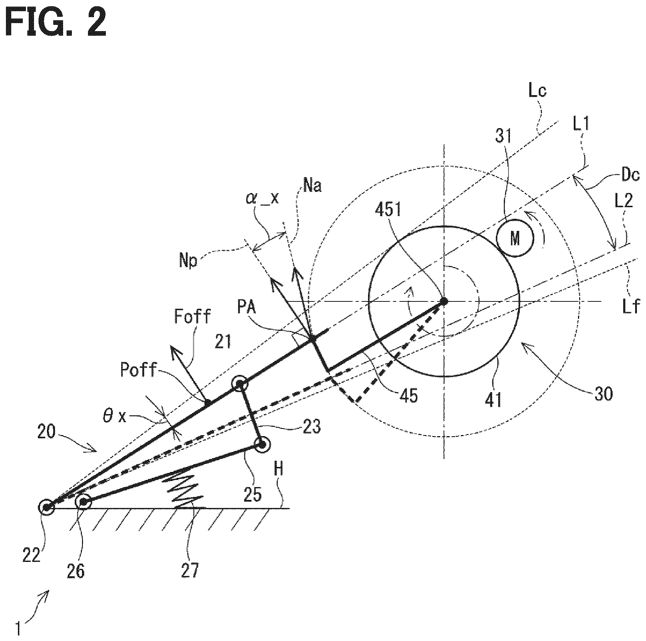

The pad 21 is provided to be operable by the driver's depression operation. The pad 21 is rotatably supported by a fulcrum member 22 provided on a housing H, and is operated within a range between a fully closed line Lc and a fully open line Lf (see FIG. 2). FIG. 1 illustrates a so-called floor type (organ type) pedal in which the pad 21 is provided to extend in a direction along one surface of the housing H. However, a suspension type (pendant type) pedal may be used. In the present embodiment, the housing portions such as a pedal housing and a motor housing that are not driven by operation of a motor 31 or a step-on operation of the pedal lever 20 are collectively referred to as a "housing H".

The arm 23 connects the pad 21 and the pedal 25. The pedal 25 has one end rotatably supported on the housing H by a fulcrum member 26 and the other end connected to the arm 23. With this arrangement, the pad 21, the arm 23, and the pedal 25 are integrally driven by an operation of the pad 21 by the driver. A pedal opening degree sensor 29 that detects a pedal opening degree $\theta p$ is provided on one end side of the pedal 25. A pedal biasing member 27 is a compression coil spring and is configured to bias the pedal 25 in an accelerator closing direction. One end of the pedal biasing member 27 is fixed to the pedal 25 and the other end of the pedal biasing member 27 is fixed to the housing H.

The actuator 30 includes a motor 31 as a drive source, and a power transmission mechanism 40. The motor 31 is, for example, a DC motor with brushes. The driving force of the motor 31 is transmitted to the pedal lever 20 via the power transmission mechanism 40. That is, by driving the motor 31, a reaction force, which is a force in the direction opposite to the depression direction, can be applied to the pedal lever 20 via the power transmission mechanism 40. Here, the actuator 30 can be considered as a series of components that transmit power from the motor 31 to the pedal lever 20 via the power transmission mechanism 40.

The power transmission mechanism 40 includes a gear set 41, an actuator lever 45, and an actuator lever biasing member 47. The gear set 41 is configured with a motor gear that rotates integrally with a motor shaft, and a plurality of gears that mesh with the motor gear. The gear set 46 transmits the driving force of the motor 31 to the actuator lever 45. An actuator sensor 49 for detecting a rotational position is provided on any of the gears constituting the gear set 41.

The actuator lever 45 has one end connected to the gear set 41 and the other end abutting against the pedal lever 20. A point of contact between the actuator lever 45 and the pedal lever 20 is referred to as a lever contact point PA. Thereby, the driving force of the motor 31 is transmitted to the pedal lever 20 via the power transmission mechanism 40. In FIG. 1, the other end of the actuator lever 45 abuts against the pad 21, but it may be configured so that it abuts against the arm 23 or the pedal 25. The contact surface of the actuator lever 45 that comes into contact with the pad 21 is formed, for example, in a spherical shape.

The actuator lever biasing member 47 is a compression coil spring, and biases the actuator lever 45 in a reaction force application direction. The actuator lever biasing member 47 has a spring force set so that the actuator lever 45 is always in contact with the pedal lever 20. In FIG. 1 and other figures, the operations of the motor 31 and the power transmission mechanism 40 are indicated by dashed arrows.

The actuator controller 50 includes a drive circuit 51 and a control unit 60. The drive circuit 51 is configured, for example, by an H-bridge circuit, and switches the power supply to the motor 31. The control unit 60 is mainly composed of a microcomputer and the like, and internally includes, although not shown in the figure, a CPU, a ROM, a RAM, an I/O, a bus line for connecting these components, and the like. Each process executed by each of the control unit 60 may be software processing or may be hardware processing. The software processing may be implemented by causing the CPU to execute a program. The program may be stored beforehand in a memory device such as a ROM, that is, in a computer-readable, non-transitory, tangible storage medium. The hardware processing may be implemented by a special purpose electronic circuit.

The control unit 60 calculates a target torque based on an actuator angle $\theta a$ based on a detection value of the actuator sensor 49 or a pedal opening $\theta p$ based on a detection value of the pedal opening degree sensor 29, and controls the drive circuit 51 with a duty according to the target torque. Since the actuator angle $\theta a$ and the pedal opening degree $\theta p$ can be converted using the gear ratio, the lever length ratio, and the like, either value may be used to calculate the target torque. Although FIG. 1 illustrates the pedal opening degree $\theta p$ being obtained directly from the pedal opening degree sensor 29, it may be obtained from a higher-level ECU via CAN communication or the like.

Here, when a representative point where the driver's foot contacts is defined as a reaction force off point Poff, the reaction force Foff applied to the reaction force off point Poff when the pedal lever 20 is in a fully closed state is expressed by an equation (1). In the equation, Tact is a motor torque which is the actuator driving force, Rlev is a lever contact distance which is the distance between the rotation center of the actuator lever 45 and the lever contact point PA, Rc is a pedal contact distance which is the distance between the rotation center of the pad 21 and the lever contact point PA, and Roff is the distance between the rotation center of the pad 21 and the reaction force off point Poff. The contact angle $\alpha 1$ is a relative angle between the reaction force application direction from the actuator lever 45 and the reaction force output direction to the pad 21. Specifically, the contact angle $\alpha 1$ is an angle between a normal line Na of a straight line connecting the rotation center of the actuator lever 45 and the lever contact point PA, and a normal line Np connecting the rotation center of the pad 21 and the lever contact point PA. For simplicity, the equation (1) is calculated geometrically and does not take into account the inclination of the contact point, etc. The same applies to the following equations.

$$Foff = Tact/Rlev \times \cos\alpha 1 \times Rc/Roff \ ...(1)$$

As shown in FIG. 2, when the pedal lever 20 is depressed, the position of the lever contact point PA is shifted, and the pedal contact distance Rc is different from that in the fully closed state. Furthermore, microscopically, the depression of the pedal lever 20 also displaces the contact point on the actuator lever 45 side, so the lever contact distance Rlev also differs from that in the fully closed state. Therefore, when a constant motor torque Tact is output, the reaction force Foff applied at the reaction force off point Poff changes depending on the pedal opening angle $\theta p$.

When the pedal opening angle $\theta p$ is a certain opening angle $\theta x$, the pedal contact distance is referred to as Rc_x, the lever contact distance is referred to as Rlev_x, and the relative angle is referred to as $\alpha\_x$, then the reaction force Foff applied at the reaction force off point Poff is expressed by an equation (2).

$$Foff = Tact/Rlev\_x \times \cos\alpha\_x \times Rc\_x/Roff \ ...(2)$$

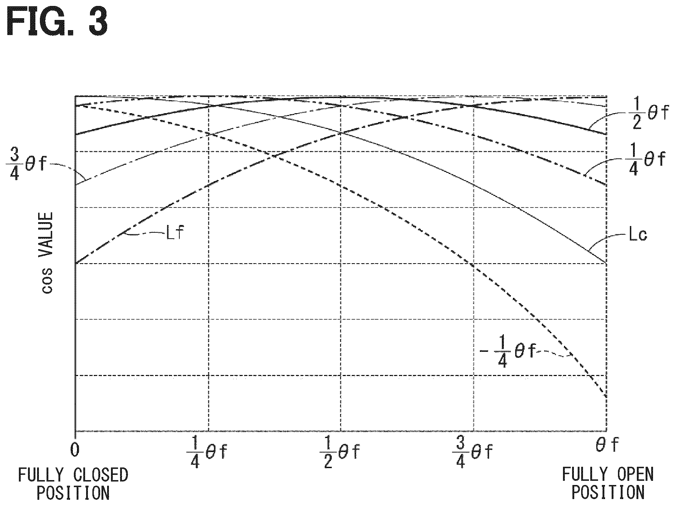

FIG. 3 shows the cosine value of the contact angle $\alpha 1$ according to the position of the rotation axis 451 of the actuator lever 45. The cos value changes depending on the lever contact distance Rlev, so the cosine values shown here are just examples. In FIG. 3, the horizontal axis represents the pedal opening degree $\theta p$, and the vertical axis represents the cosine value at the contact angle $\alpha 1$. The pedal opening degree $\theta p$ is set to $\theta p = 0$ in the fully closed state and $\theta p = \theta f$ in the fully open state.

For example, "Lc" indicates the $\cos\alpha$ value corresponding to the pedal opening degree when the rotation axis 451 is positioned on the fully closed line Lc. Each line indicates the cos value of the contact angle $\alpha 1$ when the rotation axis 451 is positioned on the fully open line Lf, the $(3/4)\theta f$ line, the $(1/2)\theta f$ line, the $(1/4)\theta f$ line, the fully closed line Lc, and the $-(1/4)\theta f$ line. The $-(1/4)\theta f$ line means that the rotation axis 451 is located outside the fully closed side of the driving range of the pedal lever 20.

As shown in FIG. 3, the cosine value of the contact angle $\alpha 1$ varies depending on the position of the rotation axis 451. In particular, when the lever contact point PA moves away from the rotation axis 451 due to the depression of the pedal lever 20, such as when the rotation axis 451 is located on the $-(1/4)\theta f$ line, the deviation of the cosine value becomes large.

Therefore, in the present embodiment, the rotation axis 451 of the actuator lever 45 is positioned so that the variation in the cos value due to the deviation of the contact angle $\alpha 1$ is suppressed in the reaction force application region Dc according to the mounting environment of the accelerator device 1.

As shown in FIG. 2, the reaction force application region Dc can be arbitrarily set between the fully closed line Lc and the fully open line Lf as a region in which the reaction force is applied. On the fully closed side of the reaction force application region Dc, a line connecting the fulcrum member 22 and the lever contact point PA is defined as a first straight line L1, and on the fully open side, a line connecting the fulcrum member 22 and the lever contact point PA is defined as a second straight line L2. In the present embodiment, the rotation axis 451 of the actuator lever 45 is positioned between the first straight line L1 and the second straight line L2.

For example, a reaction force is applied as an eco-point notification and an erroneous depression notification, and a region from approximately half-open to fully open is set as a reaction force application region Dc. In this case, the first straight line L1 is the $(1/2)\theta f$ line, the second straight line L2 is the fully open line Lf, and the rotation axis 451 is disposed between the $(1/2)\theta f$ line and the fully open line Lf. For example, by locating the rotation axis 451 on the bisector that bisects the angle between the first straight line L1 and the second straight line L2, the $\cos\alpha$ value becomes the minimum over the entire reaction force application region Dc.

Further, for example, in order to prevent erroneous depression, the rotation axis 451 may be located at a maximum efficiency position according to the pedal opening degree $\theta p$ at which it is desired to apply the maximum reaction force, such as providing maximum output near fully open. In this case, the rotation axis 451 is located on a straight line connecting the fulcrum member 22 and the lever contact point PA at the pedal opening degree $\theta p$ at which the maximum output is desired to be applied.

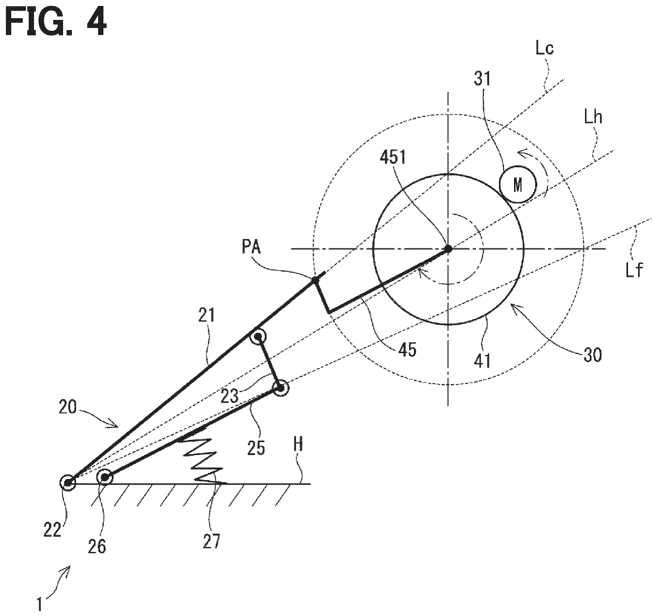

When the rotation axis 451 is located on the $(1/2)\theta f$ line, the variation in the cos value over the entire range of the pedal lever 20 from fully closed to fully open is minimized. Therefore, as shown in FIG. 4, the rotation axis 451 may be located on a bisector Lh $(= (1/2)\theta f$ line$)$ that bisects the angle between the fully closed line Lc and the fully open line Lf. This makes it possible to minimize the variation in reaction force over the entire range from fully closed to fully open.

When the entire range of the pedal lever 20 from fully closed to fully open is considered to be the reaction force application region Dc, then the fully closed line Lc is the first straight line L1, and the fully open line Lf is the second straight line L2. Placing the rotation axis 451 on the bisector Lh is understood to mean that the rotation axis 451 is located at a position where the variation in the cos value in the entire range of the reaction force application region Dc is minimized. "On the bisector" means that deviations of the order of design errors such as gear backlash are permitted. The same applies to "on a straight line," "orthogonal," etc.

As described above, the accelerator device 1 includes the pedal lever 20, the motor 31, and the power transmission mechanism 40. The pedal lever 20 operates in accordance with the depression operation. The motor 31 generates a driving force when energized. The power transmission mechanism 40 has the actuator lever 45. When electricity is applied to the motor 31, the power transmission mechanism 40 applies a reaction force, which is a force in a direction opposite to the depression direction, to the pedal lever 20 via the actuator lever 45. The actuator lever 45 is rotatable by the driving force of the motor 31, and abuts against the pedal lever 20 at a lever contact point PA.

Within the range from the fully closed position to the fully open position of the pedal lever 20, a region between a first depression angle and a second depression angle of the pedal lever 20 is defined as the reaction force application region Dc. The first depression angle and the second depression angle can be set anywhere between fully closed position and fully open position. For example, when the reaction force application region Dc is from half open to fully open, the first depression angle is $(1/2)\theta f$ and the second depression angle is $\theta f$. In addition, when the entire range from the fully closed position to the fully open position of the pedal lever 20 is defined as the reaction force application region Dc, the first depression angle is 0 and the second depression angle is $\theta f$.

In addition, a center of rotation of the member that abuts against the actuator lever 45 serves as the pedal rotation fulcrum. In the present embodiment, the member that comes into contact with the actuator lever 45 is the pad 21, and the pedal rotation fulcrum is the fulcrum member 22.

The rotation axis 451 of the actuator lever 45 is located between a first straight line L1, which is a line connecting the lever contact point PA and the fulcrum member 22 when the pedal opening angle $\theta p$ is a first depression angle, and a second straight line L2, which is a line connecting the lever contact point PA and the fulcrum member 22 when the pedal opening angle $\theta p$ is a second depression angle. With this configuration, the variation in the cos value is reduced in the reaction force application region Dc, so that the variation in the reaction force applied to the pedal lever 20 due to the pedal opening degree $\theta p$ can be reduced.

The rotation axis 451 of the actuator lever 45 is located on a bisector L3 that bisects the angle between the first straight line L1 and the second straight line L2. With this configuration, it is possible to minimize the variation in the cosine value in the reaction force application region Dc, thereby minimizing the variation in reaction force due to the pedal opening degree $\theta p$ in the entire reaction force application region Dc.

Second Embodiment:

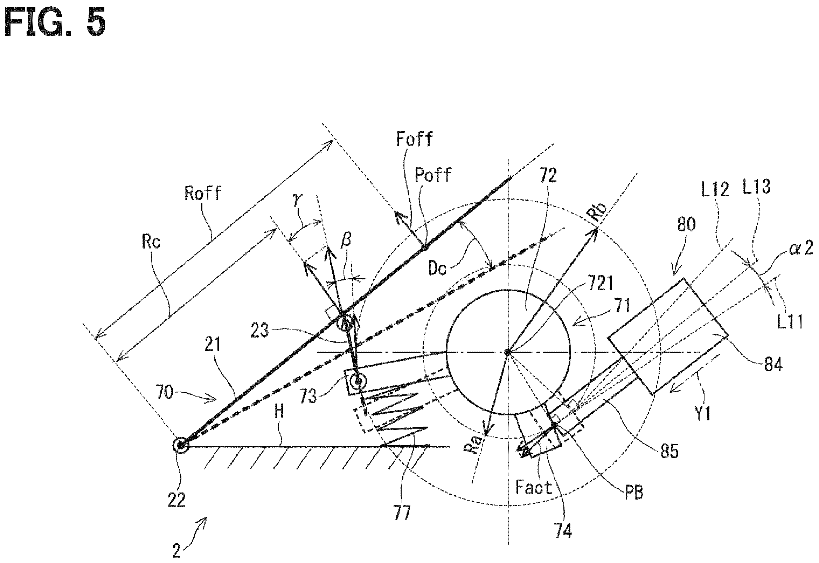

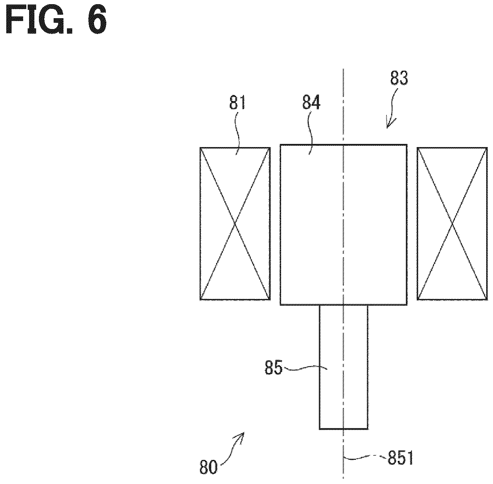

A second embodiment is shown in FIG. 5 and FIG. 6. In FIG. 5, the actuator controller 50 and the like are omitted. As shown in FIG. 5, an accelerator device 2 includes a pedal lever 70, an actuator 80 and the like. The pedal lever 70 has a pad 21, an arm 23, a pedal 71, etc., and is driven as a whole by the driver's depression operation, etc.

The pedal 71 has a shaft portion 72, an arm connection portion 73, and an actuator contact portion 74. The shaft portion 72 is rotatably supported by the housing H at an axis 721. The arm connection portion 73 is provided so as to protrude radially outward from the shaft portion 72 and is connected to the end of the arm 23 opposite the pad 21. With this arrangement, the pad 21, the arm 23, and the pedal 71 are integrally driven by an operation of the pad 21 by the driver. The actuator contact portion 74 is provided to protrude radially outward from a position on the shaft portion 72 that is different from the arm connection portion 73, and abuts against an actuator lever 85.

The pedal biasing member 77 is a compression coil spring, one end of which is fixed to the arm connection portion 73 and the other end of which is fixed to the housing H, and which biases the pedal 71 in the accelerator closing direction.

As shown in FIGS. 5 and 6, the actuator 80 includes a coil 81 as a drive source, a power transmission mechanism 83, and the like. The power transmission mechanism 83 includes a drive unit 84, an actuator lever 85, and the like. The drive unit 84 moves linearly when the coil 81 is energized.

The actuator lever 85 has one end connected to the drive unit 84 and the other end abutting against the pedal lever 70. In detail, the other end of the actuator lever 85 abuts against the actuator contact portion 74 of the pedal 71. Hereinafter, a point of contact between the actuator lever 85 and the actuator contact portion 74 is referred to as a lever contact point PB. The actuator lever 85 is linearly moved on a linear axis 851 by the drive unit 84 when a current is supplied to the coil 81.

In the present embodiment, as indicated by an arrow Y1 in FIG. 5, when current is applied to the coil 81, the drive unit 84 moves linearly, so that the actuator lever 85 presses the pedal 71 in the direction opposite to the depression direction of the pedal lever 20. This makes it possible to apply a reaction force to the pedal lever 20.

In the present embodiment, the reaction force Foff applied at the reaction force off point Poff is expressed by an equation (3). In the equation, Fact is the driving force output from the actuator lever 85, and $\alpha2$ is the contact angle between the actuator lever 85 and the pedal 71. Specifically, the contact angle $\alpha2$ is the angle between a normal line passing through the lever contact point PB of a straight line connecting the axis 721, which is the center of rotation of the pedal 71, and the lever contact point PB, and the linear axis 851 of the actuator lever 85. Hereinafter, a normal line passing through the lever contact point PB to a straight line connecting the axis 721 and the lever contact point PB will be referred to as a "lever contact normal line."

Further, an angle $\beta$ is the angle between the normal line to the axis of arm connection portion 73 and arm 23, and an angle $\gamma$ is the angle between an imaginary line extending the arm 23 to the pad 21 side and the normal line to pad 21. The imaginary line extending from the arm 23 to the pad 21 side can also be regarded as the direction in which a reaction force is applied to the pad 21. Furthermore, Ra in the equation is the distance between the axis 721 of the pedal 71 and the lever contact point PB, and Rb is the distance between the axis 721 and the connection point between the arm connection portion 73 and the arm 23.

$$Foff = Fact \times \cos\alpha2 \times \cos\beta \times \cos\gamma \times (Ra/Rb) \times (Rc/Roff) \quad ...(3)$$

As shown in the equation (3), when a constant driving force Fact is output, the reaction force Foff applied at the reaction force off point Poff varies depending on the cosine value of the contact angle $\alpha2$. Since the contact angle $\alpha2$ is a value that changes depending on the pedal opening $\theta p$, it can also be said that the reaction force Foff applied at the reaction force off point Poff changes depending on the pedal opening degree $\theta p$.

The lever contact normal line when the pedal lever 70 is fully closed is interpreted as the fully closed line, and the lever contact normal line when the pedal lever 70 is fully open is interpreted as the fully open line. When each legend is interpreted as the lever contact normal line corresponding to the pedal opening degree $\theta p$, the relationship between the pedal opening degree $\theta p$ and the cosine value of the contact angle $\alpha2$ is the same as in FIG. 3. For example, when the linear axis 851 of the actuator lever 85 is positioned on the bisector of the angle between the lever contact normal in the fully closed state and the lever contact normal in the fully open state, the cosine value of the contact angle $\alpha2$ will be as shown by the solid line indicated by $(1/2)\,\theta f$.

In the present embodiment, the linear axis 851 of the actuator lever 85 is positioned so that the variation in the cos value due to the deviation of the contact angle $\alpha2$ is suppressed in the reaction force application region Dc according to the mounting environment of the accelerator device 2. In FIG. 5, the lever contact normal line corresponding to the fully closed end of the reaction force application region Dc is referred to as L11, and the lever contact normal line corresponding to the fully open end is referred to as L12, and the actuator lever 85 is positioned so that the linear axis 851 of the actuator lever 85 is between the lever contact normal lines L11 and L12.

Furthermore, when the actuator lever 85 is disposed on the bisector L13 of the angle between the lever contact normal lines L11 and L12, the variation in the cos value over the entire reaction force application region Dc is minimized. Therefore, the axis of the actuator lever 85 may be disposed on the bisector L13. This makes it possible to minimize the variation in reaction force over the entire reaction force application region Dc. In addition, the actuator lever 85 may be disposed so that the linear axis 851 is on the lever contact normal line at the pedal opening degree θp at which maximum output is desired to be applied.

Furthermore, the entire range from fully closed state to fully open state of the pedal lever 20 can be regarded as the reaction force application region Dc, and the actuator lever 85 may be positioned so that the linear axis 851 is positioned on the bisector of the angle between the lever contact normal line in the fully closed state and the lever contact normal line in the fully open state. This makes it possible to minimize the variation in reaction force over the entire range of the pedal lever 20 from fully closed to fully open.

The accelerator device 2 of the present embodiment includes the pedal lever 70, the coil 81, and the power transmission mechanism 83. The pedal lever 70 operates in response to a depression operation. The coil 81 generates a driving force when energized. The power transmission mechanism 83 has the actuator lever 85, and when a current is applied to the coil 81, a reaction force, which is a force in the direction opposite to the depression direction, is applied to the pedal lever 70 via the actuator lever 85. The actuator lever 85 can move linearly by a driving force generated by energizing the coil 81, and abuts against the pedal lever 70 at the lever contact point PB. In the present embodiment, the member that comes into contact with the actuator lever 85 is the pedal 71, and the pedal rotation fulcrum is the axis 721 of the shaft portion 72.

The linear axis 851 of the actuator lever 85 is located between a lever contact normal line L11, which is a straight line passing through the lever contact point PB and the axis 721 perpendicular to the line connecting the lever contact point PB and the axis 721 when the pedal opening angle θp is a first depression angle, and a lever contact normal line L12, which is a straight line passing through the lever contact point PB and perpendicular to the line connecting the lever contact point PB and the axis 721 when the pedal opening angle θp is a second depression angle. With this configuration, the variation in the cos value is reduced in the reaction force application region Dc, so that the variation in the reaction force applied to the pedal lever 70 due to the pedal opening degree θp can be reduced.

The linear axis 851 of the actuator lever 85 is located on the bisector L13 that bisects the angle between the lever contact normal line L11 and the lever contact normal line L12. With this configuration, it is possible to minimize the variation in the cosine value in the reaction force application region Dc, thereby minimizing the variation in reaction force due to the pedal opening degree θp in the entire reaction force application region Dc.

In the present embodiment, the motor 31 or the coil 81 corresponds to the "drive source," and the pedal opening angle θp corresponds to the "depression angle". In the second embodiment, the lever contact normal line L11 corresponds to the "first straight line," and the lever contact normal line L12 corresponds to the "second straight line".

Other Embodiments:

In the first embodiment, the drive source is a brushed DC motor. In other embodiments, a motor other than the brushed DC motor or something other than a motor may be used as the drive source. Furthermore, when the actuator lever is moved directly as in the second embodiment, a solenoid may be used. Furthermore, the configuration, component arrangement, etc. of the power transmission mechanism may be different from the above embodiment.

The present disclosure is not limited to the embodiment described above but various modifications may be made within the scope of the present disclosure.

The present disclosure has been made in accordance with the embodiments. However, the present disclosure is not limited to such embodiments and configurations. The present disclosure also encompasses various modifications and variations within the scope of equivalents. Furthermore, various combination and formation, and other combination and formation including one, more than one or less than one element may be made in the present disclosure.

**Claims**

1. An accelerator device, comprising:

    a pedal lever (20) configured to operate in response to a pedal operation;
    a drive source (31) configured to generate a driving force by energization; and
    a power transmission mechanism (40) having an actuator lever (45) which is rotatable by the driving force of the drive source and which abuts against the pedal lever at a lever contact point, and which applies a reaction force, which is a force in a direction opposite to a pedal depression direction, to the pedal lever via the actuator lever when electricity is applied to the drive source;
    wherein
    within a range from a fully closed position to a fully open position of the pedal lever, a reaction force application region is defined as a region between a first depression angle and a second depression angle of the pedal lever, and a center of rotation of a member (21) that abuts against the actuator lever is defined as a pedal rotation fulcrum (22), and
a rotation axis (451) of the actuator lever is located between a first straight line which is a line connecting the lever contact point and the pedal rotation fulcrum when the depression angle is the first depression angle, and a second straight line which is a line connecting the lever contact point and the pedal rotation fulcrum when the depression angle is the second depression angle.

2. The accelerator device according to claim 1, wherein
the rotation axis is located on a bisector that bisects an angle between the first straight line and the second straight line.

3. An accelerator device, comprising:

a pedal lever (70) configured to operate in response to a pedal operation;
a drive source (81) configured to generate a driving force by energization; and
a power transmission mechanism (83) having an actuator lever (85) which is movable in a linear manner by the driving force of the drive source and which abuts against the pedal lever at a lever contact point, and which applies a reaction force, which is a force in a direction opposite to a pedal depression direction, to the pedal lever via the actuator lever when electricity is applied to the drive source;
wherein
within a range from a fully closed position to a fully open position of the pedal lever, a reaction force application region is defined as a region between a first depression angle and a second depression angle of the pedal lever, and a center of rotation of a member (71) that abuts against the actuator lever is defined as a pedal rotation fulcrum (721), and
a linear axis (851) of the actuator lever is located between a first straight line which is a line passing through the lever contact point and perpendicular to a line connecting the lever contact point and the pedal rotation fulcrum when the depression angle is a first depression angle, and a second straight line which is a line passing through the lever contact point and perpendicular to a line connecting the lever contact point and the pedal rotation fulcrum when the depression angle is a second depression angle.

4. The accelerator device according to claim 3, wherein
the linear axis is located on a bisector that bisects an angle between the first straight line and the second straight line.

# FIG. 1

ACTUATOR CONTROLLER

51

DRIVE CIRCUIT

55

CONTROL UNIT

# FIG. 2

# FIG. 3

# FIG. 4

**FIG. 5**

# FIG. 6

## INTERNATIONAL SEARCH REPORT

International application No.

**PCT/JP2024/005666**

**A. CLASSIFICATION OF SUBJECT MATTER**

*G05G 5/03*(2008.04)i; *B60K 26/02*(2006.01)i; *G05G 1/30*(2008.04)i
FI:  G05G5/03 Z; G05G1/30 E; B60K26/02

According to International Patent Classification (IPC) or to both national classification and IPC

**B. FIELDS SEARCHED**

Minimum documentation searched (classification system followed by classification symbols)

G05G5/03; B60K26/02; G05G1/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-75878 A (HONDA LOCK MFG. CO., LTD.) 20 April 2015 (2015-04-20) | 1-2 |
| A | JP 2011-68175 A (MIKUNI CORP.) 07 April 2011 (2011-04-07) | 1-2 |
| A | JP 5636522 B1 (HONDA MOTOR CO., LTD.) 03 December 2014 (2014-12-03) | 1-2 |
| A | JP 2022-173979 A (DENSO CORPORATION) 22 November 2022 (2022-11-22) | 3-4 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 675 391 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2015-75878 | A | 20 April 2015 | US | 2016/0246321 | A1 | |
| | | | | WO | 2015/053046 | A1 | |
| | | | | EP | 3056962 | A1 | |
| | | | | CN | 105723292 | A | |
| JP | 2011-68175 | A | 07 April 2011 | US | 2011/0083528 | A1 | |
| | | | | EP | 2301788 | A2 | |
| | | | | CN | 102029907 | A | |
| JP | 5636522 | B1 | 03 December 2014 | US | 2015/0360563 | A1 | |
| | | | | WO | 2015/049786 | A1 | |
| | | | | EP | 2907685 | A1 | |
| | | | | CN | 104884293 | A | |
| JP | 2022-173979 | A | 22 November 2022 | US | 2023/0001787 | A1 | |
| | | | | US | 2023/0001789 | A1 | |
| | | | | WO | 2021/182560 | A1 | |
| | | | | WO | 2021/182559 | A1 | |
| | | | | CN | 115243916 | A | |
| | | | | CN | 115427249 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023029587 A
- JP 5636522 B